# EUROPEAN PATENT APPLICATION

(11) **EP 3 109 775 A1**
(43) Date of publication of application: **28.12.2016**
(21) Application number: 15855026.9
(22) Date of filing: 06.09.2015
(51) Int. Cl.: G06F 17/30

(54) **MULTIMEDIA CONTENT PROVIDING METHOD AND DEVICE**

(30) Priority: 27.10.2014 CN 201410585089
(71) Applicant: Beijing Baidu Netcom Science and Technology Co., Ltd, Beijing 100085 (CN)
(72) Inventor: QIN, Shouke, Beijing 100085 (CN); HAN, You, Beijing 100085 (CN); LIU, Binxin, Beijing 100085 (CN); ZHANG, Zeming, Beijing 100085 (CN)
(74) Representative: Romano, Giuseppe
(86) International application number: PCT/CN2015/088975
(87) International publication number: WO 2016/065987

(57) **Abstract**

A multimedia content providing method and device. The multimedia content providing method comprises: acquiring a keyword (S101); acquiring a displaying list, wherein the displaying list comprises at least one displaying result (S102); according to the keyword, acquiring a multimedia content related to the keyword in the at least one displaying result (S103); and providing the multimedia content in a corresponding displaying result in the displaying list (S104). The multimedia content providing method provides a richer variety of results for a user, and increases the interest and attention degree of the user; in addition, a keyword is related to user requirements; therefore, the acquired multimedia content and displaying result can better satisfy the requirement and interest of the user, thereby improving the user experience.

## Description

### CROSS-REFERENCE TO RELATED APPLICATION

This application claims priority to and benefits of Chinese Patent Application Serial No. 201410585089.2, titled with "METHOD AND APPARATUS FOR PROVIDING MULTIMEDIA CONTENT", filed on October 27, 2014 by BEIJING BAIDU NETCOM SCIENCE AND TECHNOLOGY CO., LTD.

### FIELD

The present disclosure relates to the internet technology field, and more particularly to a method and apparatus for providing multimedia content.

### BACKGROUND

With the continuous development of the search engine technology, the search engine may provide amount of information to a user. As an example, after the user inputs a search term, the search engine may search information according to the search term, and provide the search result to the user. As another example, the search engine may recommend related information to the user according to the user's operation. Currently, the content provided by the search engine is mostly text result, and rarely multimedia result such as pictures. Actually, compared to the text, the multimedia information such as picture, audio and video is more vividly and attractive, and has more information, which may provide abundant information to the user more effectively.

Although the search engine may provide some results containing picture information when providing the search result to the user, the provided picture mostly corresponds to the URL (Uniform Resource Locator) of website. And the picture corresponding to the URL would not be changed when a result corresponding to the URL is provided, no matter what search term is inputted or what is required by the user. Thus, the provided picture result is not attractive, and cannot satisfy the user's requirement effectively, such that the user experience is affected. Similarly, in other situations without searching information, such as in the situation of providing recommendation result (such as recommendation information, advertisement) to the user via a client or a page, the information provided is mostly text, and the result which is more attractive and can satisfy the user's requirement cannot be provided to the user, such that the user experience is poor.

### SUMMARY

Embodiments of the present disclosure seek to solve the problems above to at least some extent.

Accordingly, a first objective of the present disclosure is to provide a method for providing multimedia content, which may provide more abundant and diversified result to a user, stimulate the user's interest and attention, and further satisfy the user's requirement and interest and improve the user experience.

A second objective of the present disclosure is to provide an apparatus for providing multimedia content.

A third objective of the present disclosure is to provide another method for providing multimedia content.

A fourth objective of the present disclosure is to provide another apparatus for providing multimedia content.

A fifth objective of the present disclosure is to provide a device.

A sixth objective of the present disclosure is to provide another device.

A seventh objective of the present disclosure is to provide a non-transitory computer storage medium.

An eighth objective of the present disclosure is to provide another non-transitory computer storage medium.

In order to achieve the above objectives, according to embodiments of a first aspect of the present disclosure, a method for providing multimedia content is provided, including: acquiring a keyword; acquiring a display list, in which the display list includes at least one display result; acquiring multimedia content related to the keyword in the at least one display result according to the keyword; and providing the multimedia content in a corresponding display result in the display list.

With the method for providing multimedia content according to embodiments of the present disclosure, the keyword and the display list containing the display result may be acquired, the multimedia content related to the keyword may be acquired in the display result in the display list according to the keyword and then the multimedia content is provided in the display result, such that the multimedia content may be added into the display result, and more abundant and diversified result may be provided to the user so as to stimulate the user's interest and attention. Additionally, since the keyword is associated with the user's requirement, the acquired multimedia content and display result may further satisfy the user's requirement and interest, thus improving the user experience.

According to embodiments of a second aspect of the present disclosure, an apparatus for providing multimedia content is provided, including: a first acquiring module, configured to acquire a keyword; a second acquiring module, configured to acquire a display list, in which the display list includes at least one display result; a third acquiring module, configured to acquire multimedia content related to the keyword in the at least one display result according to the keyword; and a providing module, configured to provide the multimedia content in a corresponding display result in the display list.

With the apparatus for providing multimedia content according to embodiments of the present disclosure, the keyword and the display list containing the display result may be acquired, the multimedia content related to the keyword may be acquired in the display result in the display list according to the keyword and then the multimedia content is provided in the display result, such that the multimedia content may be added into the display result, and more abundant and diversified result may be provided to the user so as to stimulate the user's interest and attention. Additionally, since the keyword is associated with the user's requirement, the acquired multimedia content and display result may further satisfy the user's requirement and interest, thus improving the user experience.

According to embodiments of a third aspect of the present disclosure, another method for providing multimedia content is provided, including: acquiring a search term and a keyword; acquiring a search result display list according to the search term, in which the search result display list includes at least one search result; acquiring multimedia content related to the keyword in the at least one search result according to the keyword; and providing the multimedia content in a corresponding search result in the search result display list.

With the method for providing multimedia content according to embodiments of the present disclosure, the search result display list may be acquired according to the search term and the multimedia content related to the keyword may be acquired in the search result in the search result display list according to the keyword, and the multimedia content may be provided in the search result, such that the multimedia content may be added into the search result, more abundant and diversified result may be provided to the user, so as to stimulate the user's interest and attention. Additionally, since the keyword is associated with the user's search demand, the acquired multimedia content and search result may further satisfy the user's requirement and interest, thus improving the user experience.

According to embodiments of a fourth aspect of the present disclosure, another apparatus for providing multimedia content is provided, including: a first acquiring module, configured to acquire a search term; a second acquiring module, configured to acquire a keyword; a third acquiring module, configured to acquire a search result display list according to the search term, in which the search result display list includes at least one search result; a fourth acquiring module, configured to acquire multimedia content related to the keyword in the at least one search result according to the keyword; and a providing module, configured to provide the multimedia content in a corresponding search result in the search result display list.

With the apparatus for providing multimedia content according to embodiments of the present disclosure, the search result display list may be acquired according to the search term and the multimedia content related to the keyword may be acquired in the search result in the search result display list according to the keyword, and the multimedia content may be provided in the search result, such that the multimedia content may be added into the search result, more abundant and diversified result may be provided to the user, so as to stimulate the user's interest and attention. Additionally, since the keyword is associated with the user's search demand, the acquired multimedia content and search result may further satisfy the user's requirement and interest, thus improving the user experience.

According to embodiments of a fifth aspect of the present disclosure, a device is provided, including: one or more processors; a memory; one or more programs stored in the memory, when executed by the one or more processors, performing following acts: acquiring a keyword; acquiring a display list, in which the display list includes at least one display result; acquiring multimedia content related to the keyword in the at least one display result according to the keyword; and providing the multimedia content in a corresponding display result in the display list.

According to embodiments of a sixth aspect of the present disclosure, another device is provided, including: one or more processors; a memory; one or more programs stored in the memory, when executed by the one or more processors, performing following acts: acquiring a search term and a keyword; acquiring a search result display list according to the search term, in which the search result display list includes at least one search result; acquiring multimedia content related to the keyword in the at least one search result according to the keyword; and providing the multimedia content in a corresponding search result in the search result display list.

According to embodiments of a seventh aspect of the present disclosure, a non-transitory computer storage medium having one or more programs stored therein is provided. When executed by a device, the one or more programs cause the device to: acquire a keyword; acquire a display list, in which the display list includes at least one display result; acquire multimedia content related to the keyword in the at least one display result according to the keyword; and provide the multimedia content in a corresponding display result in the display list.

According to embodiments of an eighth aspect of the present disclosure, another non-transitory computer storage medium having one or more programs stored therein is provided. When executed by a device, the one or more programs cause the device to: acquire a search term and a keyword; acquire a search result display list according to the search term, in which the search result display list includes at least one search result; acquire multimedia content related to the keyword in the at least one search result according to the keyword; and provide the multimedia content in a corresponding search result in the search result display list.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a flow chart of a method for providing multimedia content according to an embodiment of the present disclosure;
Fig. 2 is a flow chart of a process for acquiring a multimedia content library according to an embodiment of the present disclosure;
Figs. 3a and 3b are schematic views showing multimedia content provided in a search result according to an embodiment of the present disclosure;
Fig. 4 is a schematic view showing a webpage according to an embodiment of the present disclosure;
Fig. 5 is a flow chart of a method for providing multimedia content according to a specific embodiment of the present disclosure;
Fig. 6 is a schematic view showing a webpage according to another embodiment of the present disclosure;
Fig. 7 is a schematic view showing multimedia content provided in a page currently browsed by a user according to an embodiment of the present disclosure;
Fig. 8 is a block diagram showing an apparatus for providing multimedia content according to an embodiment of the present disclosure;
Fig. 9 is a block diagram showing an apparatus for providing multimedia content according to another embodiment of the present disclosure;
Fig. 10 is a flow chart of a method for providing multimedia content according to another embodiment of the present disclosure;
Fig. 11 is a block diagram showing an apparatus for providing multimedia content according to yet another embodiment of the present disclosure; and
Fig. 12 is a block diagram showing an apparatus for providing multimedia content according to still another embodiment of the present disclosure.

### DETAILED DESCRIPTION

Embodiments of the present disclosure will be described in detail in the following descriptions, examples of which are shown in the accompanying drawings, in which the same or similar elements and elements having same or similar functions are denoted by like reference numerals throughout the descriptions. The embodiments described herein with reference to the accompanying drawings are explanatory and illustrative, which are used to generally understand the present disclosure. The embodiments shall not be construed to limit the present disclosure.

In the description of the present disclosure, it should be noted that, "a plurality of" means two or more than two. In addition, terms such as "first" and "second" are used herein for purposes of description and are not intended to indicate or imply relative importance or significance or to imply the number of indicated technical features.

A method and an apparatus for providing multimedia content according to embodiments of the present disclosure are described below with reference to drawings.

In order to provide more vivid result which is in accordance with the user's requirement to the user, the present disclosure provides a method for providing multimedia content. The method includes: acquiring a keyword; acquiring a display list, in which the display list includes at least one display result; acquiring multimedia content related to the keyword in the at least one display result according to the keyword; and providing the multimedia content in a corresponding display result in the display list.

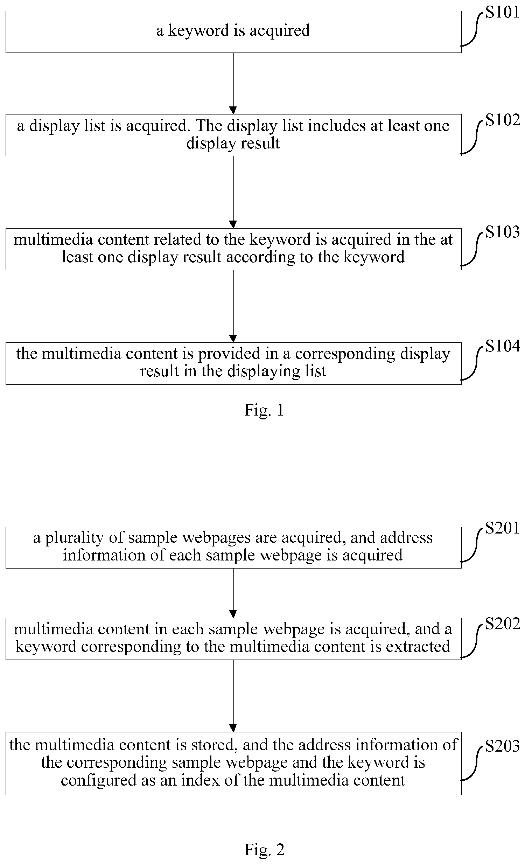

Fig. 1 is a flow chart of a method for providing multimedia content according to an embodiment of the present disclosure. As shown in Fig. 1, the method for providing multimedia content according to an embodiment of the present disclosure includes the followings.

In step S101, a keyword is acquired.

In an embodiment of the present disclosure, the keyword may be acquired by extracting a search term. The search term may be inputted by the user when conducting a search. There may be one or more search terms. For example, if the search term is "differences between A and B", then the keyword "A" and keyword "B" may be extracted.

In an embodiment of the present disclosure, the keyword may also be acquired by analyzing attribute information of the user. The attribute information of the user may include one or more of interest and hobby information of the user, current content information browsed by the user and historical content information browsed by the user. For example, if a page currently browsed by the user is a news page "Tourism officials in Sanya visit hinews website and recommend wedding travel strongly", then the keyword "Sanya, wedding dress, photography" may be extracted by analyzing the page content.

Certainly, the keyword may also be acquired by combining the search term and attribute information of the user. For example, when the search term is "flower", if it is known that the user likes rose according to the interest and hobby information of the user, then the keyword "rose" may be acquired; or if the user is an owner of a flower shop, then the keyword may be a word related to different types of flower, such as "rose", "lily", "carnation" or "statice" etc.

In this way, whether the keyword is acquired according to the search term or attribute information of the user, it may be associated with the user's requirement to a great extent.

In step S102, a display list is acquired. The display list includes at least one display result.

The display result in the display list may be information provided by a search engine, such as text, picture, audio, link or video, etc.

In an embodiment of the present disclosure, the display list may be a search result display list formed according to the search term. Specifically, the search engine may search for information according to the search term so as to acquire at least one search result and to generate the search result display list. If there are a plurality of search results, the plurality of search results may be sorted to generate the search result display list. For example, the plurality of search results may be sorted according to the relativity of each search result to the search term. In an embodiment of the present disclosure, the display list may be a list formed according to a result related to the keyword and acquired according to the keyword. The display result may be a result acquired by a search according to the keyword or may be a recommendation result recommended actively according to the keyword.

In step S103, multimedia content related to the keyword is acquired in the at least one display result according to the keyword.

The multimedia content may include a picture, audio, video or animation etc. The multimedia content may be acquired from a pre-created multimedia content library, or may be acquired from a third party multimedia content library which is already authorized.

Specifically, in an embodiment of the present disclosure, acquiring multimedia content related to the keyword in the at least one display result according to the keyword may include: acquiring address information of the at least one display result; and inquiring a multimedia content library according to the keyword and the address information of the at least one display result, so as to acquire the multimedia content related to the keyword. The address information may be a URL or the like.

In an embodiment of the present disclosure, there may be one or more multimedia content related to the keyword. For example, for the keyword "flower", the corresponding multimedia content may be multimedia content which includes various pictures having different flower or a picture having flower websites or the like.

If no multimedia content related to the keyword is acquired from the pre-created multimedia content library, then the multimedia content related to the keyword may be acquired from the third party multimedia content library. A content recognition may be performed on the multimedia content in the third party multimedia content library in advance, so as to generate a corresponding keyword as an index of the multimedia content according to the recognition result. Then, the acquired keyword may be matched with the indices in the multimedia content library to acquire the related multimedia content.

In embodiments of the present disclosure, the multimedia content in the multimedia content library may be acquired by analyzing webpages.

Specifically, the step of creating multimedia data by analyzing webpages is shown in Fig. 2. Fig. 2 is a flow chart of a process for acquiring a multimedia content library according to an embodiment of the present disclosure. Specifically, the multimedia content library may be acquired by the followings.

In step S201, a plurality of sample webpages are acquired, and address information of each sample webpage is acquired.

In embodiments of the present disclosure, the sample webpage may be various webpages containing multimedia content on the internet. When acquiring the sample webpages, it is also required to acquire the address information of each sample webpage.

In step S202, multimedia content in each sample webpage is acquired, and a keyword corresponding to the multimedia content is extracted.

In embodiments of the present disclosure, acquiring the multimedia content in each sample webpage may include the followings.

### 1. Analyzing each sample webpage

Specifically, an analysis such as a subject recognition, a page classification and a page characterization may be performed on the sample webpage, so as to acquire multimedia content related to the subject, classification, characteristic of the sample webpage later.

The page subject may be identified based on the page structure, page differences and the like. And some multimedia content (such as menu pictures, recommendation content, etc.) included in other objects other than the page subject is filtered, i.e., this multimedia content is not configured as the multimedia content to be acquired.

It is beneficial to extract multimedia content more closely related to the sample webpage for different page classifications by classifying the sample webpages.

It is useful to calculate the relativity of a page to multimedia content by characterizing the sample webpages. The page characteristic may include a content characteristic of page (such as, a page title, description information, page content, page keyword, etc.), a behavior characteristic of user (such as, residence time of user, another redirection operation, search term inputted by the user, etc.), a behavior characteristic of advertiser (such as, advertisement keyword etc.) and the like.

### 2. Analyzing multimedia content in each sample webpage

Specifically, a process and analysis such as the filtration, content recognition, conversation, and characterization may be performed on the multimedia content in the sample webpage, so as to filter the pictures and acquire the multimedia content which is related to the sample webpage and suitable to be displayed in the display list according to the analysis result.

The multimedia content may be filtered based on the size, position, resolution and the like of the multimedia content. For example, the recommendation pictures located in other parts other than the page subject are filtered. In order to not affect the loading and displaying speed of the display list, the multimedia content with size exceeding a preset threshold may be filtered. And the pictures with low resolution are filtered so as to acquire clear pictures.

A text recognition may be performed on the multimedia content by an OCR (Optical Character Recognition) technique. The picture content may be recognized by an image recognition technique, for example recognizing the human face, scene, animal etc. A content recognition may be performed on audio and video content by a speech recognition technique.

The content characteristic of multimedia content may be acquired according to multimedia content recognition results. Also, the context characteristic of multimedia content may be acquired according to the position of the multimedia content in the sample webpage, such as the description information, text information in context, content information in a same block, content information of a interlinked webpage, and the like.

### 3. Acquiring the relativity of the multimedia content to each sample webpage according to the analysis result of each sample webpage and the analysis result of the multimedia content and performing a filtration and sorting on the multimedia content according to the relativity

After acquiring the multimedia content, the corresponding keyword may be parsed according to the content and characteristic of the multimedia content. For example, if a picture shows a dog, then the corresponding keyword may be "dog", "pet" or the like.

In step S203, the multimedia content is stored, and the address information of the corresponding sample webpage and the keyword is configured as an index of the multimedia content.

In step S104, the multimedia content is provided in a corresponding display result in the display list.

In embodiments of the present disclosure, after acquiring the multimedia content related to the keyword, the acquired multimedia content may be provided in the corresponding display result. Specifically, the acquired multimedia content corresponding to address information of a display result may be displayed in the display result according to the address information of the display result. Or based on the relativity of the index of multimedia content in the multimedia content library to each display result, the acquired multimedia content is provided in the display result corresponding to the highest relativity.

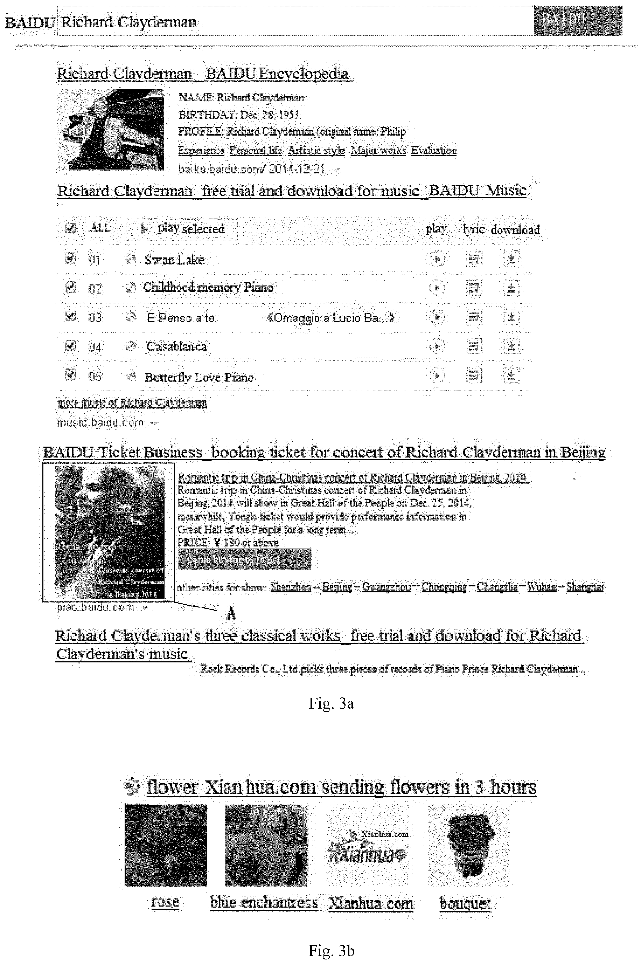

For example, Figs. 3a and 3b are schematic views showing multimedia content provided in a search result according to an embodiment of the present disclosure.

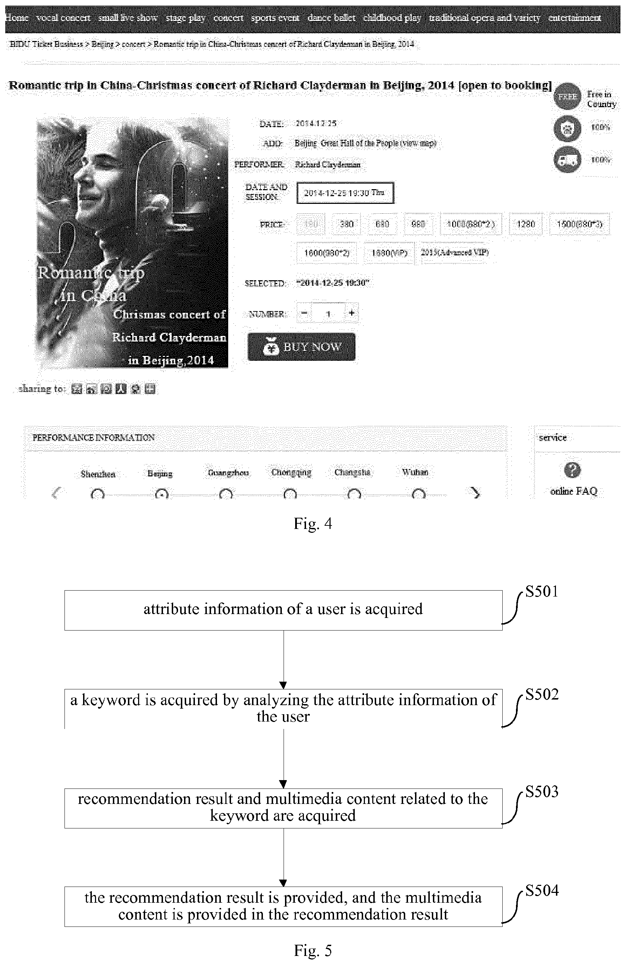

As shown in Fig. 3a, for the search term "Richard Clayderman", a search result "BAIDU Ticket Business_booking ticket for concert of Richard Clayderman in Beijing" in the search result display list corresponds to a webpage shown in Fig. 4. Therefore, a corresponding picture may be inquired from the multimedia content library according to the keyword "Richard Clayderman" and website information of the webpage shown in Fig. 4, and then this picture may be provided in region A of Fig. 3a. As shown in Fig. 3a, music results related to "Richard Clayderman" may further be provided.

In embodiments of the present disclosure, a plurality of related multimedia content may be provided in the search result. As shown in Fig. 3b, when searching for "flower" in the search engine, the search result (first line) is a search result title, the second line is an arrangement of many pictures provided according to the keyword "flower". A text description may be attached below each picture. Certainly, it is alright to not attach the text description, which is not limited herein.

With the method for providing multimedia content according to embodiments of the present disclosure, the keyword and the display list containing the display result may be acquired, the multimedia content related to the keyword may be acquired in the display result in the display list according to the keyword and then the multimedia content is provided in the display result, such that the multimedia content may be added into the display result, and more abundant and diversified result may be provided to the user so as to stimulate the user's interest and attention. Additionally, since the keyword is associated with the user's requirement, the acquired multimedia content and display result may further satisfy the user's requirement and interest, thus improving the user experience.

Fig. 5 is a flow chart of a method for providing multimedia content according to a specific embodiment of the present disclosure. As shown in Fig. 5, the method for providing multimedia content according to a specific embodiment of the present disclosure includes the followings.

In step S501, attribute information of a user is acquired.

The attribute information of the user includes one or more of interest and hobby information of the user, current content information browsed by the user and historical content information browsed by the user.

In step S502, a keyword is acquired by analyzing the attribute information of the user.

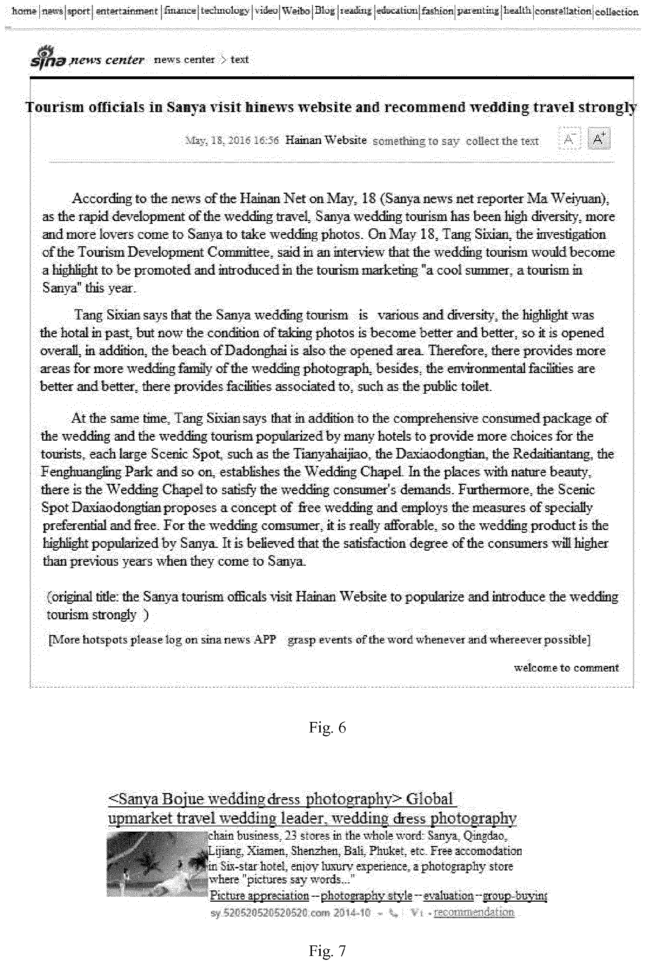

Specifically, for example, if the page currently browsed by the user is a webpage shown in Fig. 6, a recognition may be performed on the page to extract keywords thereof, such as "Sanya", "wedding dress", "photography" and the like.

In step S503, recommendation result and multimedia content related to the keyword are acquired.

After extracting the keyword, the recommendation result may be acquired according to the keyword. The recommendation result may be a search result related to the keyword, or may be a promotion result in a database recommended by an inquiry. And a multimedia content library is inquired according to the keyword, so as to acquire the related multimedia content.

In step S504, the recommendation result is provided, and the multimedia content is provided in the recommendation result.

For example, for the keywords "Sanya", "wedding dress" and "photography" acquired as described above, the content shown in Fig. 7 may be provided in the page browsed by the user currently or later.

With the method for providing multimedia content according to embodiments of the present disclosure, the keyword may be acquired according to the attribute information of the user, and the recommendation result and multimedia content related to the keyword may be further acquired and provided to the user, such that different requirements from different types of users may be satisfied, and the multimedia content may be displayed adaptively according to the attribute of user, thus meeting the personalization requirement of user and further improving the user experience.

In order to implement the above-mentioned embodiments, the present disclosure further provides an apparatus for providing multimedia content.

The apparatus for providing multimedia content includes: a first acquiring module, configured to acquire a search term and a keyword; a second acquiring module, configured to acquire a search result display list according to the search term, in which the search result display list includes at least one search result; a third acquiring module, configured to acquire multimedia content related to the keyword in the at least one search result according to the keyword; and a providing module, configured to provide the multimedia content in a corresponding search result in the display list.

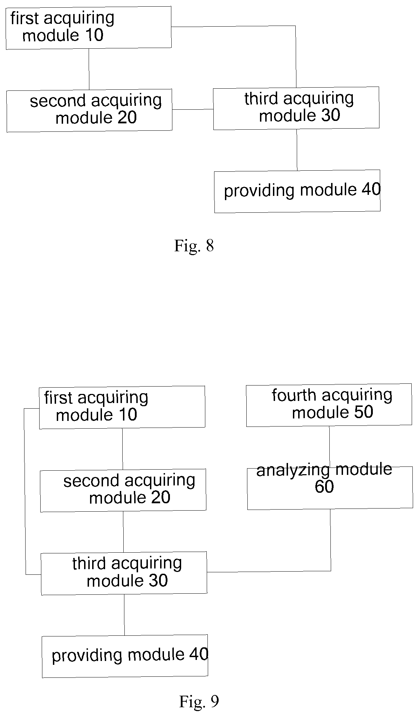

Fig. 8 is a block diagram showing an apparatus for providing multimedia content according to an embodiment of the present disclosure.

As shown in Fig. 8, the apparatus for providing multimedia content according to an embodiment of the present disclosure includes: a first acquiring module 10, a second acquiring module 20, a third acquiring module 30 and a providing module 40.

Specifically, the first acquiring module 10 is configured to acquire a keyword.

In an embodiment of the present disclosure, the keyword may be acquired by extracting a search term. The search term may be inputted by the user when conducting a search. There may be one or more search terms. For example, if the search term is "differences between A and B", then the keyword "A" and keyword "B" may be extracted.

In an embodiment of the present disclosure, the first acquiring module 10 may acquire the keyword by analyzing attribute information of the user. The attribute information of the user may include one or more of interest and hobby information of the user, current content information browsed by the user and historical content information browsed by the user. For example, if a page currently browsed by the user is a news page "Tourism officials in Sanya visit hinews website and recommend wedding travel strongly", then the keyword "Sanya, wedding dress, photography" may be extracted by analyzing the page content.

Certainly, the first acquiring module 10 may also acquire the keyword by combining the search term and attribute information of the user. For example, when the search term is "flower", if it is known that the user likes rose according to the interest and hobby information of the user, then the keyword "rose" may be acquired; or if the user is an owner of a flower shop, then the keyword may be a word related to different types of flower, such as "rose", "lily", "carnation" or "statice" etc.

In this way, whether the keyword is acquired according to the search term or attribute information of the user, it may be associated with the user's requirement to a great extent.

The second acquiring module 20 is configured to acquire a display list. The display list includes at least one display result. The display result in the display list may be information provided by a search engine, such as text, picture, audio, link or video, etc.

In an embodiment of the present disclosure, the display list may be a search result display list formed according to the search term. Specifically, the second acquiring module 20 may search for information according to the search term so as to acquire at least one search result and to generate the search result display list. If there are a plurality of search results, the plurality of search results may be sorted to generate the search result display list. For example, the plurality of search results may be sorted according to the relativity of each search result to the search term.

In an embodiment of the present disclosure, the display list may be a list formed according to a result related to the keyword and acquired according to the keyword. The display result may be a result acquired by a search according to the keyword or may be a recommendation result recommended actively according to the keyword.

The third acquiring module 30 is configured to acquire multimedia content related to the keyword in the at least one display result according to the keyword. The multimedia content may include a picture, audio, video or animation etc. The multimedia content may be acquired from a pre-created multimedia content library, or may be acquired from a third party multimedia content library which is already authorized.

More specifically, in an embodiment of the present disclosure, the third acquiring module 30 is specifically configured to: acquire address information of the at least one display result; and inquire a multimedia content library according to the keyword and the address information of the at least one display result, so as to acquire the multimedia content related to the keyword. The address information may be a URL or the like.

In an embodiment of the present disclosure, there may be one or more multimedia content related to the keyword. For example, for the keyword "flower", the corresponding multimedia content may be multimedia content which includes various pictures having different flower or a picture having flower websites or the like.

If the third acquiring module 30 acquires no multimedia content related to the keyword from the pre-created multimedia content library, then the multimedia content related to the keyword may be acquired from the third party multimedia content library. A content recognition may be performed on the multimedia content in the third party multimedia content library in advance, so as to generate a corresponding keyword as an index of the multimedia content according to the recognition result. Then, the acquired keyword may be matched with the indices in the multimedia content library to acquire the related multimedia content.

In embodiments of the present disclosure, the multimedia content in the multimedia content library may be acquired by analyzing webpages.

More specifically, the step of creating multimedia data by analyzing webpages is shown in Fig. 2, which may be referred to the above-mentioned embodiment.

The providing module 40 is configured to provide the multimedia content in a corresponding display result in the display list.

In embodiments of the present disclosure, after the third acquiring module 30 acquires the multimedia content related to the keyword, the providing module 40 may provide the acquired multimedia content in the corresponding display result. More specifically, the providing module 40 may display the acquired multimedia content corresponding to address information of a display result in the display result according to the address information of the display result. Or based on the relativity of the index of multimedia content in the multimedia content library to each display result, the acquired multimedia content is provided in the display result corresponding to the highest relativity.

For example, Figs. 3a and 3b are schematic views showing multimedia content provided in a search result according to an embodiment of the present disclosure.

As shown in Fig. 3a, for the search term "Richard Clayderman", a search result "BAIDU Ticket Business_booking ticket for concert of Richard Clayderman in Beijing" in the search result display list corresponds to a webpage shown in Fig. 4. Therefore, a corresponding picture may be inquired from the multimedia content library according to the keyword "Richard Clayderman" and website information of the webpage shown in Fig. 4, and then this picture may be provided in region A of Fig. 3a.

In embodiments of the present disclosure, a plurality of related multimedia content may be provided in the search result. As shown in Fig. 3b, when searching for "flower" in the search engine, the search result (first line) is a search result title, the second line is an arrangement of many pictures provided according to the keyword "flower". A text description may be attached below each picture. Certainly, it is alright to not attach the text description, which is not limited herein.

With the apparatus for providing multimedia content according to embodiments of the present disclosure, the keyword and the display list containing the display result may be acquired, the multimedia content related to the keyword may be acquired in the display result in the display list according to the keyword and then the multimedia content is provided in the display result, such that the multimedia content may be added into the display result, and more abundant and diversified result may be provided to the user so as to stimulate the user's interest and attention. Additionally, since the keyword is associated with the user's requirement, the acquired multimedia content and display result may further satisfy the user's requirement and interest, thus improving the user experience.

Fig. 9 is a block diagram showing an apparatus for providing multimedia content according to another embodiment of the present disclosure.

As shown in Fig. 9, the apparatus for providing multimedia content according to another embodiment of the present disclosure includes: a first acquiring module 10, a second acquiring module 20, a third acquiring module 30, a providing module 40, a fourth acquiring module 50 and an analyzing module 60.

Specifically, the fourth acquiring module 50 is configured to acquire attribute information of a user. In embodiments of the present disclosure, the attribute information of the user includes one or more of interest and hobby information of the user, current content information browsed by the user and historical content information browsed by the user.

The analyzing module 60 is configured to analyze the attribute information of the user so as to acquire the keyword. More specifically, for example, if the page currently browsed by the user is a webpage shown in Fig. 6, the analyzing module 60 may perform a recognition on the page to extract keywords thereof, such as "Sanya", "wedding dress", "photography" and the like.

With the apparatus for providing multimedia content according to embodiments of the present disclosure, the keyword may be acquired according to the attribute information of the user, and the recommendation result and multimedia content related to the keyword may be further acquired and provided to the user, such that different requirements from different types of users may be satisfied, and the multimedia content may be displayed adaptively according to the attribute of user, thus meeting the personalization requirement of user and further improving the user experience.

In order to implement the above-mentioned embodiments, the present disclosure further provides another method for providing multimedia content.

The method for providing multimedia content includes: acquiring a search term and a keyword; acquiring a search result display list according to the search term, in which the search result display list includes at least one search result; acquiring multimedia content related to the keyword in the at least one search result according to the keyword; and providing the multimedia content in a corresponding search result in the search result display list.

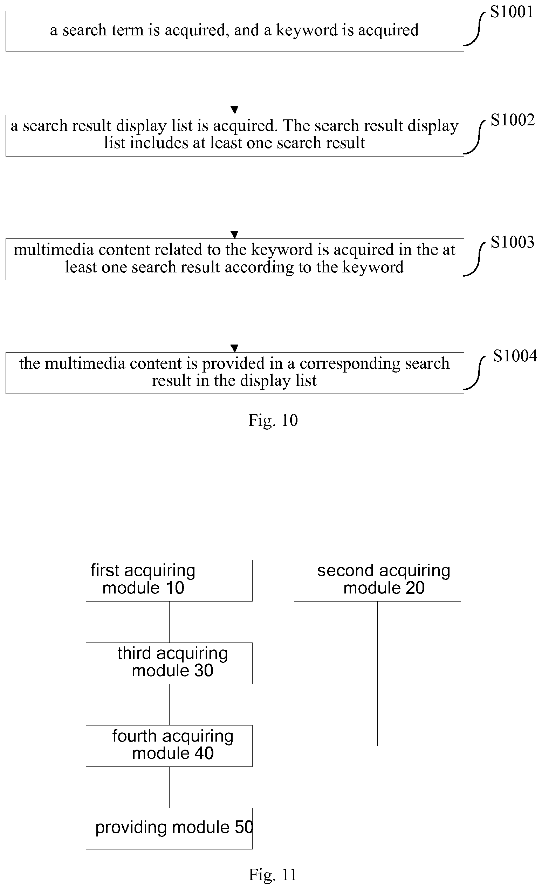

Fig. 10 is a flow chart of a method for providing multimedia content according to another embodiment of the present disclosure.

As shown in Fig. 10, the method for providing multimedia content includes the followings.

In step S1001, a search term is acquired, and a keyword is acquired.

There may be one or more search terms.

In embodiments of the present disclosure, the search term may be inputted by a user when a search is conducted. For example, "Richard Clayderman," "flower" and the like inputted by the user in a search box.

In an embodiment of the present disclosure, the keyword may be acquired by extracting the search term. For example, if the search term is "differences between A and B", then the keyword "A" and keyword "B" may be extracted.

In an embodiment of the present disclosure, the step of acquiring attribute information of a user and analyzing the attribute information of the user so as to acquire the keyword may further be included. The attribute information of the user may include one or more of interest and hobby information of the user, current content information browsed by the user and historical content information browsed by the user. For example, if a page currently browsed by the user is a news page "Tourism officials in Sanya visit hinews website and recommend wedding travel strongly", then the keyword "Sanya, wedding dress, photography" may be extracted by analyzing the page content.

Certainly, the keyword may also be acquired by combining the search term and attribute information of the user. For example, when the search term is "flower", if it is known that the user likes rose according to the interest and hobby information of the user, then the keyword "rose" may be acquired; or if the user is an owner of a flower shop, then the keyword may be a word related to different types of flower, such as "rose", "lily", "carnation" or "statice" etc.

In this way, whether the keyword is acquired according to the search term or attribute information of the user, it may be associated with the user's requirement to a great extent.

In step S1002, a search result display list is acquired according to the search term. The search result display list includes at least one search result.

In an embodiment of the present disclosure, a search engine may search for information according to the search term so as to acquire at least one search result and to generate the search result display list. If there are a plurality of search results, the plurality of search results may be sorted to generate the search result display list. For example, the plurality of search results may be sorted according to the relativity of each search result to the search term.

The search result may be a webpage, text, picture, audio, video and the like related to the search term.

In step S1003, multimedia content related to the keyword is acquired in the at least one search result according to the keyword.

The multimedia content may include a picture, audio, video or animation etc. The multimedia content may be acquired from a pre-created multimedia content library, or may be acquired from a third party multimedia content library which is already authorized.

Specifically, in an embodiment of the present disclosure, acquiring multimedia content related to the keyword in the at least one display result according to the keyword may include: acquiring address information of the at least one display result; and inquiring a multimedia content library according to the keyword and the address information of the at least one display result, so as to acquire the multimedia content related to the keyword. The address information may be a URL or the like.

In an embodiment of the present disclosure, there may be one or more multimedia content related to the keyword. For example, for the keyword "flower", the corresponding multimedia content may be multimedia content which includes various pictures having different flower or a picture having flower websites or the like.

If no multimedia content related to the keyword is acquired from the pre-created multimedia content library, then the multimedia content related to the keyword may be acquired from the third party multimedia content library. A content recognition may be performed on the multimedia content in the third party multimedia content library in advance, so as to generate a corresponding keyword as an index of the multimedia content according to the recognition result. Then, the acquired keyword may be matched with the indices in the multimedia content library to acquire the related multimedia content.

In embodiments of the present disclosure, the multimedia content in the multimedia content library may be acquired by analyzing webpages.

Specifically, the step of creating multimedia data by analyzing a webpage is shown in Fig. 2.

In step S1004, the multimedia content is provided in a corresponding search result in the display list.

In embodiments of the present disclosure, after acquiring the multimedia content related to the keyword, the acquired multimedia content may be provided in the corresponding search result. Specifically, the acquired multimedia content corresponding to address information of a search result may be displayed in the search result according to the address information of the search result. Or based on the relativity of the index of multimedia content in the multimedia content library to each search result, the acquired multimedia content is provided in the search result corresponding to the highest relativity.

For example, Figs. 3a and 3b are schematic views showing multimedia content provided in a search result according to an embodiment of the present disclosure.

As shown in Fig. 3a, for the search term "Richard Clayderman", a search result "BAIDU Ticket Business_booking ticket for concert of Richard Clayderman in Beijing" in the search result display list corresponds to a webpage shown in Fig. 4. Therefore, a corresponding picture may be inquired from the multimedia content library according to the keyword "Richard Clayderman" and website information of the webpage shown in Fig. 4, and then this picture may be provided in region A of Fig. 3a. As shown in Fig. 3a, music results related to "Richard Clayderman" may further be provided.

In embodiments of the present disclosure, a plurality of related multimedia content may be provided in the search result. As shown in Fig. 3b, when searching for "flower" in the search engine, the search result (first line) is a search result title, the second line is an arrangement of many pictures provided according to the keyword "flower". A text description may be attached below each picture. Certainly, it is alright to not attach the text description, which is not limited herein.

With the method for providing multimedia content according to embodiments of the present disclosure, the search result display list may be acquired according to the search term and the multimedia content related to the keyword may be acquired in the search result in the search result display list according to the keyword, and the multimedia content may be provided in the search result, such that the multimedia content may be added into the search result, more abundant and diversified result may be provided to the user, so as to stimulate the user's interest and attention. Additionally, since the keyword is associated with the user's search demand, the acquired multimedia content and search result may further satisfy the user's requirement and interest, thus improving the user experience.

In order to implement the above-mentioned embodiments, the present disclosure further provides another apparatus for providing multimedia content.

The apparatus for providing multimedia content includes: a first acquiring module, configured to acquire a search term; a second acquiring module, configured to acquire a keyword; a third acquiring module, configured to acquire a search result display list according to the search term, in which the search result display list includes at least one search result; a fourth acquiring module, configured to acquire multimedia content related to the keyword in the at least one search result according to the keyword; and a providing module, configured to provide the multimedia content in a corresponding search result in the search result display list.

Fig. 11 is a block diagram showing an apparatus for providing multimedia content according to yet another embodiment of the present disclosure.

As shown in Fig. 11, the apparatus for providing multimedia content according to an embodiment of the present disclosure includes: a first acquiring module 10, a second acquiring module 20, a third acquiring module 30, a fourth acquiring module 40 and a providing module 50.

Specifically, the first acquiring module 10 is configured to acquire a search term. There may be one or more search terms.

In an embodiment of the present disclosure, the first acquiring module 10 may acquire the search term inputted by a user when the user conducts a search. For example, the first acquiring module 10 may acquire "Richard Clayderman," "flower" and the like inputted by the user in a search box.

The second acquiring module 20 is configured to acquire a keyword.

In an embodiment of the present disclosure, the keyword may be acquired by extracting the search term. For example, if the search term is "differences between A and B", then the keyword "A" and keyword "B" may be extracted.

In an embodiment of the present disclosure, the second acquiring module 20 may acquire the keyword by analyzing attribute information of the user. The attribute information of the user may include one or more of interest and hobby information of the user, current content information browsed by the user and historical content information browsed by the user. For example, if a page currently browsed by the user is a news page "Tourism officials in Sanya visit hinews website and recommend wedding travel strongly", then the keyword "Sanya, wedding dress, photography" may be extracted by analyzing the page content.

Certainly, the second acquiring module 20 may also acquire the keyword by combining the search term and attribute information of the user. For example, when the search term is "flower", if it is known that the user likes rose according to the interest and hobby information of the user, then the keyword "rose" may be acquired; or if the user is an owner of a flower shop, then the keyword may be a word related to different types of flower, such as "rose", "lily", "carnation" or "statice" etc.

In this way, whether the keyword is acquired according to the search term or attribute information of the user, it may be associated with the user's requirement to a great extent.

The third acquiring module 30 is configured to acquire a search result display list. The search result display list includes at least one search result. In an embodiment of the present disclosure, the third acquiring module 30 may search for information according to the search term so as to acquire at least one search result and to generate the search result display list. If there are a plurality of search results, the plurality of search results may be sorted to generate the search result display list. For example, the plurality of search results may be sorted according to the relativity of each search result to the search term. The search result may be a webpage, text, picture, audio, video or the like related to the search term.

The fourth acquiring module 40 is configured to acquire multimedia content related to the keyword in the at least one search result according to the keyword. The multimedia content may include a picture, audio, video or animation etc. The multimedia content may be acquired from a pre-created multimedia content library, or may be acquired from a third party multimedia content library which is already authorized.

More specifically, in an embodiment of the present disclosure, the fourth acquiring module 40 is specifically configured to: acquire address information of the at least one display result; and inquire a multimedia content library according to the keyword and the address information of the at least one display result, so as to acquire the multimedia content related to the keyword. The address information may be a URL or the like.

In an embodiment of the present disclosure, there may be one or more multimedia content related to the keyword. For example, for the keyword "flower", the corresponding multimedia content may be multimedia content which includes various pictures having different flower or a picture having flower websites or the like.

If the fourth acquiring module 40 acquires no multimedia content related to the keyword from the pre-created multimedia content library, then the multimedia content related to the keyword may be acquired from the third party multimedia content library. A content recognition may be performed on the multimedia content in the third party multimedia content library in advance, so as to generate a corresponding keyword as an index of the multimedia content according to the recognition result. Then, the acquired keyword may be matched with the indices in the multimedia content library to acquire the related multimedia content.

In embodiments of the present disclosure, the multimedia content in the multimedia content library may be acquired by analyzing webpages.

More specifically, the step of creating multimedia data by analyzing webpages is shown in Fig. 2, which may be referred to the above-mentioned embodiment.

The providing module 50 is configured to provide the multimedia content in a corresponding search result in the display list.

In embodiments of the present disclosure, after the fourth acquiring module 40 acquires the multimedia content related to the keyword, the providing module 50 may provide the acquired multimedia content in the corresponding search result. More specifically, the providing module 50 may display the acquired multimedia content corresponding to address information of a search result in the search result according to the address information of the search result. Or based on the relativity of the index of multimedia content in the multimedia content library to each display result, the acquired multimedia content is provided in the search result corresponding to the highest relativity.

For example, Figs. 3a and 3b are schematic views showing multimedia content provided in a search result according to an embodiment of the present disclosure.

As shown in Fig. 3a, for the search term "Richard Clayderman", a search result "BAIDU Ticket Business_booking ticket for concert of Richard Clayderman in Beijing" in the search result display list corresponds to a webpage shown in Fig. 4. Therefore, a corresponding picture may be inquired from the multimedia content library according to the keyword "Richard Clayderman" and website information of the webpage shown in Fig. 4, and then this picture may be provided in region A of Fig. 3a.

In embodiments of the present disclosure, a plurality of related multimedia content may be provided in the search result. As shown in Fig. 3b, when searching for "flower" in the search engine, the search result (first line) is a search result title, the second line is an arrangement of many pictures provided according to the keyword "flower". A text description may be attached below each picture. Certainly, it is alright to not attach the text description, which is not limited herein.

With the apparatus for providing multimedia content according to embodiments of the present disclosure, the search result display list may be acquired according to the search term and the multimedia content related to the keyword may be acquired in the search result in the search result display list according to the keyword, and the multimedia content may be provided in the search result, such that the multimedia content may be added into the search result, more abundant and diversified result may be provided to the user, so as to stimulate the user's interest and attention. Additionally, since the keyword is associated with the user's search demand, the acquired multimedia content and search result may further satisfy the user's requirement and interest, thus improving the user experience.

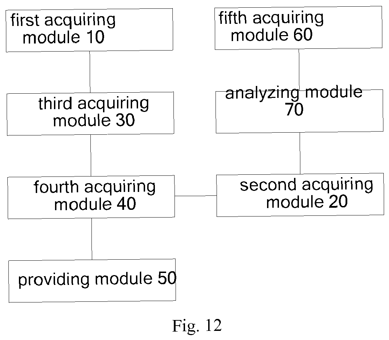

In an embodiment of the present disclosure, as shown in Fig. 12, based on the apparatus shown in Fig. 11, an apparatus for providing multimedia content may further include a fifth acquiring module 60 and an analyzing module 70.

Specifically, the fifth acquiring module 60 is configured to acquire attribute information of a user. In embodiments of the present disclosure, the attribute information of the user includes one or more of interest and hobby information of the user, current content information browsed by the user and historical content information browsed by the user.

The analyzing module 70 is configured to analyze the attribute information of the user so as to acquire the keyword. More specifically, for example, if the page currently browsed by the user is a webpage shown in Fig. 6, the analyzing module 70 may perform a recognition on the page to extract keywords thereof, such as "Sanya", "wedding dress", "photography" and the like.

With the apparatus for providing multimedia content according to embodiments of the present disclosure, the keyword may be acquired according to the attribute information of the user, and the recommendation result and multimedia content related to the keyword may be further acquired and provided to the user, such that different requirements from different types of users may be satisfied, and the multimedia content may be displayed adaptively according to the attribute of user, thus meeting the personalization requirement of user and further improving the user experience.

In order to implement the above-mentioned embodiments, the present disclosure further provides a device.

The device according to an embodiment of the present disclosure includes: one or more processors; a memory; one or more programs stored in the memory, when executed by the one or more processors, performing following acts: acquiring a keyword; acquiring a display list, in which the display list includes at least one display result; acquiring multimedia content related to the keyword in the at least one display result according to the keyword; and providing the multimedia content in a corresponding display result in the display list.

In order to implement the above-mentioned embodiments, the present disclosure further provides another device.

The device according to an embodiment of the present disclosure includes: one or more processors; a memory; one or more programs stored in the memory, when executed by the one or more processors, performing following acts: acquiring a search term and a keyword; acquiring a search result display list according to the search term, in which the search result display list includes at least one search result; acquiring multimedia content related to the keyword in the at least one search result according to the keyword; and providing the multimedia content in a corresponding search result in the search result display list.

In order to implement the above-mentioned embodiments, the present disclosure further provides a non-transitory computer storage medium.

The non-transitory computer storage medium according to an embodiment of the present disclosure has one or more programs stored therein. When executed by a device, the one or more programs cause the device to: acquire a keyword; acquire a display list, in which the display list includes at least one display result; acquire multimedia content related to the keyword in the at least one display result according to the keyword; and provide the multimedia content in a corresponding display result in the display list.

In order to implement the above-mentioned embodiments, the present disclosure further provides another non-transitory computer storage medium.

The non-transitory computer storage medium according to an embodiment of the present disclosure has one or more programs stored therein. When executed by a device, the one or more programs cause the device to: acquire a search term and a keyword; acquire a search result display list according to the search term, in which the search result display list includes at least one search result; acquire multimedia content related to the keyword in the at least one search result according to the keyword; and provide the multimedia content in a corresponding search result in the search result display list.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, in which the function may be executed not in the order shown or discussed herein, but may be executed essentially simultaneously or in contrary order, which should be understood by those skilled in the art.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or optical disks, etc.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A method for providing multimedia content, comprising:
acquiring a keyword;
acquiring a display list, wherein the display list comprises at least one display result;
acquiring multimedia content related to the keyword in the at least one display result according to the keyword; and
providing the multimedia content in a corresponding display result in the display list.

2. The method according to claim 1, wherein the display list is a search result display list formed according to a search term, and the keyword is acquired by extracting the search term.

3. The method according to claim 1 or 2, further comprising:
acquiring attribute information of a user; and
analyzing the attribute information of the user to acquire the keyword.

4. The method according to claim 3, wherein the attribute information comprises one or more of interest and hobby information of the user, current content information browsed by the user and historical content information browsed by the user.

5. The method according to any one of claims 1-4, wherein acquiring multimedia content related to the keyword in the at least one display result according to the keyword comprises:
acquiring address information of the at least one display result; and
inquiring a multimedia content library according to the keyword and the address information of the at least one display result, so as to acquire the multimedia content related to the keyword.

6. The method according to claim 5, wherein the multimedia content library is acquired by following acts of:
acquiring a plurality of sample webpages, and acquiring address information of each sample webpage;
acquiring multimedia content in each sample webpage and extracting a keyword corresponding to the multimedia content; and
storing the multimedia content, and configuring the address information of the corresponding sample webpage and the keyword as an index of the multimedia content.

7. An apparatus for providing multimedia content, comprising:
a first acquiring module, configured to acquire a keyword;
a second acquiring module, configured to acquire a display list, wherein the display list comprises at least one display result;
a third acquiring module, configured to acquire multimedia content related to the keyword in the at least one display result according to the keyword; and
a providing module, configured to provide the multimedia content in a corresponding display result in the display list.

8. The apparatus according to claim 7, wherein the display list is a search result display list formed according to a search term, and the keyword is acquired by extracting the search term.

9. The apparatus according to claim 7 or 8, further comprising:
a fourth acquiring module, configured to acquire attribute information of a user; and
an analyzing module, configured to analyze the attribute information of the user to acquire the keyword.

10. The apparatus according to claim 9, wherein the attribute information comprises one or more of interest and hobby information of the user, current content information browsed by the user and historical content information browsed by the user.

11. The apparatus according to any one of claims 7-10, wherein the third acquiring module is specifically configured to:
acquire address information of the at least one display result; and
inquire a multimedia content library according to the keyword and the address information of the at least one display result, so as to acquire the multimedia content related to the keyword.

12. The apparatus according to claim 12, wherein the multimedia content library is acquired by following acts of:
acquiring a plurality of sample webpages, and acquiring address information of each sample webpage;
acquiring multimedia content in each sample webpage and extracting a keyword corresponding to the multimedia content; and
storing the multimedia content, and configuring the address information of the corresponding sample webpage and the keyword as an index of the multimedia content.

13. A method for providing multimedia content, comprising:
acquiring a search term and a keyword;
acquiring a search result display list according to the search term, wherein the search result display list comprises at least one search result;
acquiring multimedia content related to the keyword in the at least one search result according to the keyword; and
providing the multimedia content in a corresponding search result in the search result display list.

14. The method according to claim 13, wherein the keyword is acquired by extracting the search term.

15. The method according to claim 13 or 14, further comprising:
acquiring attribute information of a user; and
analyzing the attribute information of the user to acquire the keyword.

16. The method according to any one of claims 13-15, wherein acquiring multimedia content related to the keyword in the at least one search result according to the keyword comprises:
acquiring address information of the at least one search result; and
inquiring a multimedia content library according to the keyword and the address information of the at least one search result, so as to acquire the multimedia content related to the keyword.

17. An apparatus for providing multimedia content, comprising:
a first acquiring module, configured to acquire a search term;
a second acquiring module, configured to acquire a keyword;
a third acquiring module, configured to acquire a search result display list according to the search term, wherein the search result display list comprises at least one search result;
a fourth acquiring module, configured to acquire multimedia content related to the keyword in the at least one search result according to the keyword; and
a providing module, configured to provide the multimedia content in a corresponding search result in the search result display list.

18. The apparatus according to claim 17, wherein the keyword is acquired by extracting the search term.

19. The apparatus according to claim 17 or 18, further comprising:
a fifth acquiring module, configured to acquire attribute information of a user; and
an analyzing module, configured to analyze the attribute information of the user to acquire the keyword.

20. The apparatus according to any one of claims 17-19, wherein the third acquiring module is specifically configured to:
acquire address information of the at least one search result; and
inquire a multimedia content library according to the keyword and the address information of the at least one search result, so as to acquire the multimedia content related to the keyword.

21. A device, comprising:
one or more processors;
a memory;
one or more programs stored in the memory, when executed by the one or more processors, performing following acts:
acquiring a keyword;
acquiring a display list, wherein the display list comprises at least one display result;
acquiring multimedia content related to the keyword in the at least one display result according to the keyword; and
providing the multimedia content in a corresponding display result in the display list.

22. A device, comprising:
one or more processors;
a memory;
one or more programs stored in the memory, when executed by the one or more processors, performing following operations:
acquiring a search term and a keyword;
acquiring a search result display list according to the search term, wherein the search result display list comprises at least one search result;
acquiring multimedia content related to the keyword in the at least one search result according to the keyword; and
providing the multimedia content in a corresponding search result in the search result display list.

23. A non-transitory computer storage medium having one or more programs stored therein, wherein when executed by a device, the one or more programs cause the device to:
acquire a keyword;
acquire a display list, wherein the display list comprises at least one display result;
acquire multimedia content related to the keyword in the at least one display result according to the keyword; and
provide the multimedia content in a corresponding display result in the display list.

24. A non-transitory computer storage medium having one or more programs stored therein, wherein when executed by a device, the one or more programs cause the device to:
acquire a search term and a keyword;
acquire a search result display list according to the search term, wherein the search result display list comprises at least one search result;
acquire multimedia content related to the keyword in the at least one search result according to the keyword; and
provide the multimedia content in a corresponding search result in the search result display list.
